(19) Europäisches Patentamt / European Patent Office / Office européen des brevets

(11) **EP 3 128 584 B1**

(12) **EUROPEAN PATENT SPECIFICATION**

(45) Date of publication and mention
of the grant of the patent:
**12.12.2018 Bulletin 2018/50**

(21) Application number: **15773258.7**

(22) Date of filing: **04.03.2015**

(51) Int Cl.:
*C22C 19/03* (2006.01)     *C22C 28/00* (2006.01)
*C22C 30/00* (2006.01)     *H01M 4/24* (2006.01)
*H01M 10/34* (2006.01)     *H01M 4/38* (2006.01)

(86) International application number:
**PCT/JP2015/056361**

(87) International publication number:
**WO 2015/151704 (08.10.2015 Gazette 2015/40)**

(54) **NICKEL HYDROGEN SECONDARY BATTERY**

NICKEL-WASSERSTOFF-SEKUNDÄRBATTERIE

BATTERIE SECONDAIRE AU NICKEL-HYDROGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2014 JP 2014071785**

(43) Date of publication of application:
**08.02.2017 Bulletin 2017/06**

(73) Proprietor: **FDK Corporation
Tokyo 108-8212 (JP)**

(72) Inventors:
• **ISHIDA, Jun
Tokyo 108-8212 (JP)**
• **KAI, Takuya
Tokyo 108-8212 (JP)**

(74) Representative: **Epping - Hermann - Fischer
Patentanwaltsgesellschaft mbH
Schloßschmidstraße 5
80639 München (DE)**

(56) References cited:
WO-A1-2009/037806     JP-A- 2001 316 744
JP-A- 2008 235 173     JP-A- 2010 231 949
JP-A- 2012 204 177     JP-A- 2013 030 345
JP-A- 2013 108 105     JP-A- 2014 026 844
US-A1- 2011 052 983    US-A1- 2014 030 583
US-B2- 7 700 237

## Description

## Technical Field

The present invention relates to a nickel hydrogen secondary battery.

## Background Art

Nickel hydrogen secondary batteries have been used in various applications such as use in a variety of portable equipment and a hybrid electric vehicle, from the viewpoint of having a higher capacity and higher environmental safety compared with nickel cadmium secondary batteries.

Even though a typical nickel-hydrogen secondary battery has a high capacity, a large self-discharge is accompanied. As a result, the residual capacity decreases after a long standing period, and thereby a charging has been often required immediately before use.

Accordingly, in order to improve the self-discharge characteristics of a nickel hydrogen secondary battery, a number of studies have been made to develop various suppressed self-discharge type nickel-hydrogen secondary batteries (for example, refer to Patent Document 1).

Such a suppressed self-discharge type nickel-hydrogen secondary battery allows the reduction in residual capacity to decrease when left standing after charging in advance by a user, having an advantage that the frequency of occurrence in need of recharging immediately before use can be reduced. Taking such advantage, a nickel-hydrogen secondary battery with suppressed self-discharge can be an excellent battery achieving both of the easiness to use comparable to a dry battery and the capacity equal to or higher than that of a dry battery.

JP 2001 316744 A discloses a hydrogen storage alloy (and an alkali secondary battery comprising the same) having the general formula $Ln_{1-x}Mg_x(Ni_{1-y}T_y)_z$, wherein Ln is at least one element selected from lanthanoid elements, Ca, Sr, Sc, Y, Ti, Zr and Hf and the amount of La in Ln is 10 to 50 atomic%, T is at least one selected from Li, V, Nb, Ta, Cr, Mo, Mn, Fe, Co, Al, Ga, Zn, Sn, In, Cu, Si, P and B, and x, y, z represent $0.05 \leqq x <0.20$, $0 \leqq y \leqq 0.5$, and $2..8 \leqq z \leqq 3.9$, respectively.

US 2014/030583 A1 discloses a nickel-metal hydride secondary cell comprising a container, and an electrode group hermetically contained in the container together with an alkaline electrolyte solution, the electrode group including a separator, a negative electrode and a positive electrode, wherein the negative electrode contains a hydrogen absorbing alloy having a composition represented by a general formula: $(RE_{1-x}T_x)_{1-y}Mg_yNi_{z-a}Al_a$ (where RE is at least one element selected from among Y, Sc and rare-earth elements, T is at least one element selected from among Zr, V and Ca, and subscripts x, y, z and a are values respectively satisfying $0 \leqq x$, $0.05 \leqq y \leqq 0.35$, $2.8 \leqq z \leqq 3.9$, and $0.10 \leqq a \leqq 0.25$), the hydrogen absorbing alloy has a crystal structure in which an AB2 subunit and an AB5 subunit are superimposed one upon the other, and Cr is substituted for part of the Ni. As the alkaline electrolyte, an alkaline electrolyte containing sodium hydroxide as a main constituent (and optionally KOH and/or LiOH) is is preferred in view of excellent self-discharge characteristics (please see paragraph [0023]).

US 7 700 237 B2 discloses a hydrogen storage alloy (and an alkali secondary battery comprising the same) comprising a composition expressed by a general formula:

$$(La_aPr_bNd_cz_d)_{1-w}Mg_wNi_{z-x-y}Al_xT_y$$

(where Z is at least one element selected from the group consisting of Ce, Pm, Sm, Eu, Gd, Tb, Dy, Ho, Er, Tm, Yb, Lu, Ca, Sr, Sc, Y, Yb, Ti, Zr and Hf and Z includes Sm as an indispensable element, and T is at least one element selected from the group consisting of V, Nb, Ta, Cr, Mo, Mn, Fe, Co, Ga, Zn, Sn, In, Cu, Si, P and B, and subscripts a, b, c and d fall in ranges of $0 \leqq a \leqq 0.25$, $0<b$, $0<c$, and $0.05 \leqq d \leqq 0.20$, respectively, and satisfy the relationship expressed by a+b+c+d=1, where $0.20 \leqq b/c \leqq 0.35$, and subscripts x, y, z and w fall in ranges of $0.15 \leqq x \leqq 0.30$, $0 \leqq y \leqq 0.5$, $3.3 \leqq z \leqq 3.8$, and $0.05 \leqq w \leqq 0.15$, respectively).

US 2011/052983 A1 discloses an alkaline storage battery having a positive electrode, a negative electrode, and an alkaline electrolyte solution, and the negative electrode having fluorinated oil being present on the surface thereof. The negative electrode includes a hydrogen-absorbing alloy represented by the general formula $Ln_{1-x}Mg_xNi_{y-a-b}Al_aM_b$, where Ln is at least one element selected from Zr, Ti, and a rare-earth element including Y; M is at least one element selected from the group consisting of V, Nb, Ta, Cr, Mo, Mn, Fe, Co, Ga, Zn, Sn, In, Cu, Si, P, and B; $0.05 \leqq x \leqq 0.30$; $0.05 \leqq a \leqq 0.30$; $0 \leqq b \leqq 0.50$; and $2.8 \leqq y \leqq 3.9$.

# EP 3 128 584 B1

### Prior Art Document

### Patent Document

Patent Document 1: Japanese Patent Laid-Open No. 2007-149646

### Summary of the Invention

### Problems to be solved by the Invention

It is, however, confirmed that a conventional suppressed self-discharge type nickel hydrogen secondary battery causes the phenomenon of reduction in the discharge voltage (operating voltage) when discharged after left standing for a long period or after left standing under a high-temperature environment, in spite of a sufficient residual battery capacity. The use of such a battery having a lowered operating voltage in an apparatus in need of a relatively high operating voltage causes a problem that the apparatus cannot be operated in spite of a sufficient residual battery capacity. In particular, a battery pack with a plurality of batteries connected in series has considerable reduction in the operating voltage of the battery pack as a whole, due to the accumulation of the amount of reduction in the operating voltage of each battery. An apparatus using such a battery pack, therefore, tends to have the problem described above. In this manner, the occurrence of reduction in the operating voltage prevents the battery capacity being sufficiently used up. As a result, the available capacity to be taken out from a battery decreases. Accordingly, it is desired to develop a battery which maintains the residual capacity rate at a high level with suppressed self-discharge, while suppressing reduction in the operating voltage in parallel.

An object of the present invention is, in light of these circumstances, to provide a nickel hydrogen secondary battery which suppresses the self-discharge and the reduction in the operating voltage in parallel, even after left standing for a long period.

### Means for Solving the Problems

In order to achieve the above object, the present invention provides a nickel hydrogen secondary battery according to claim 1. Preferred embodiments are set forth in the dependent claims.

### Advantageous Effects of the Invention

The nickel hydrogen secondary battery of the present invention maintains the residual capacity rate at a high level with suppressed self-discharge, while suppressing reduction in the operating voltage in parallel, even after left standing for a long period. As a result, the nickel hydrogen secondary battery of the present invention can secure the voltage required for driving an apparatus even after left standing for a long period, thereby suppressing the occurrence of the problem that the apparatus cannot be operated in spite of a sufficient residual battery capacity, and using the battery capacity sufficiently. In other words, the present invention can provide a nickel hydrogen secondary battery easy to use, having a high available battery capacity even after left standing for a long period or after left standing under a high-temperature environment, with reduction in the operating voltage being suppressed.

### Brief Description of the Drawings

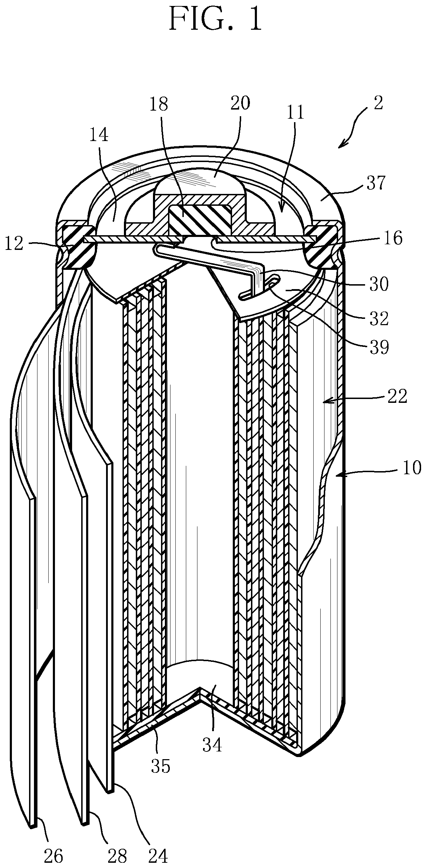

FIG. 1 is a perspective view showing a nickel hydrogen secondary battery partially broken away in an embodiment of the present invention.

### Mode for Carrying out the Invention

The nickel-hydrogen secondary battery (hereinafter, simply referred to as battery) 2 of the present invention will be described as follows with reference to drawing.

Although the battery 2 to which the present invention is applicable is not specifically limited, a cylindrical battery 2 having the AA size shown in FIG. 1 applied with the present invention will be described as an example.

As shown in FIG. 1, the battery 2 includes an outer can 10 having a bottomed cylindrical shape with an open upper end as a container. The outer can 10 has electrical conductivity, including a bottom wall 35 functioning as a negative electrode terminal. A sealing member 11 is fixed to the opening of the outer can 10. The sealing member 11 includes a cover plate 14 and a positive electrode terminal 20, and provides a positive electrode terminal 20 as well as sealing the outer can 10. The cover plate 14 is a disk-shaped member having electrical conductivity. In the opening of the outer can 10, the cover plate 14 and a ringshaped insulating packing 12 surrounding the cover plate 14 are disposed. The insulating packing 12 is fixed to the opening edge 37 of the outer can 10 with crimping of the opening edge 37 of the outer can 10. In other words, the cover plate 14 and the insulating packing 12 gas-tightly close the opening of the outer can 10 in cooperation with each other.

The cover plate 14 has a central open hole 16 in the center. On the outer face of the cover plate 14, a rubber valve 18 to close the central open hole 16 is disposed. Further, on the outer face of the cover plate 14, the metal positive electrode terminal 20 having a cylindrical shape with a flange is electrically connected, such that the valve 18 is covered. The positive electrode terminal 20 is presses the valve 18 toward the cover plate 14. The positive electrode terminal 20 has an open gas vent hole which is not shown in drawing.

In a normal state, the central open hole 16 is gas-tightly closed with the valve 18. In contrast, when the internal pressure of the outer can 10 is increased due to the generation of a gas therein, the valve 18 is compressed by the internal pressure to open the central open hole 16, to thereby release the gas to the outside through the central open hole 16 and the gas vent hole of the positive electrode terminal 20 from inside of the outer can 10. In other words, a safety valve for the battery is formed of the central open hole 16, the valve 18 and the positive electrode terminal 20.

The outer can 10 accommodates an electrode group 22 together with an alkaline electrolyte (not shown in drawing). The electrode group 22 is composed of a positive electrode 24, a negative electrode 26, and a separator 28 all of which have a strip-shape, and these are wound in whorl with the separator 28 sandwiched between the positive electrode 24 and the negative electrode 26. That is, the positive electrode 24 and the negative electrode 26 are overlapped with each other via the separator 28. The outermost periphery of the electrode group 22 formed of a portion of the negative electrode 26 (the outermost peripheral part) is in contact with the inner wall of the outer can 10. In other words, the negative electrode 26 and the outer can 10 are electrically connected to each other.

In the outer can 10, a positive electrode lead 30 is disposed between the electrode group 22 and the cover plate 14. More specifically, the positive electrode lead 30 has one end connected to the positive electrode 24, and another end connected to the cover plate 14. The positive electrode terminal 20 and the positive electrode 24 are, therefore, electrically connected to each other through the positive electrode lead 30 and the cover plate 14. A circular upper insulating member 32 is disposed between the cover plate 14 and the electrode group 22, and the positive electrode lead 30 extends through a slit 39 disposed in the insulating member 32. Further, a circular lower insulating member 34 is disposed between the electrode group 22 and the bottom of the outer can 10.

The outer can 10 further contains a predetermined amount of an alkaline electrolyte injected therein (not shown in drawing). Most part of the injected alkaline electrolyte is held by the electrode group 22, and allows the charge-discharge reaction to proceed between the positive electrode 24 and the negative electrode 26. As the alkaline electrolyte, an alkaline electrolyte containing NaOH as the main solute is used. The alkaline electrolyte containing NaOH as the main solute has a function to greatly suppress the self-discharge reaction of a battery in compared with other alkaline electrolytes containing KOH or the like as the main solute. Here, the alkaline electrolyte containing NaOH as the main solute means an alkaline electrolyte containing NaOH with a number of moles of Na of 50% or more relative to the sum of the molar number of the alkaline metal elements contained in an alkaline electrolyte. The alkaline electrolyte for use in the present embodiment preferably contains at least one of KOH and LiOH as a solute in addition to NaOH. Specific examples of the alkaline electrolyte adoptable in the present invention include a sodium hydroxide aqueous solution and a mixed aqueous solution including a sodium hydroxide aqueous solution to which a potassium hydroxide aqueous solution and a lithium hydroxide aqueous solution are appropriately added on an as needed basis. In this case, the content of NaOH is preferably at least 50% of the total solutes. Further, for the content ratio of KOH, NaOH and LiOH as the respective solutes in the mixed aqueous solution, preferably the content of NaOH is the highest. More preferably, the molar ratio of KOH, NaOH and LiOH has a relation, for example, shown by the following formula (I).

$$KOH:NaOH:LiOH=0.8:7.0:0.02... \qquad (I)$$

As a material for the separator 28, for example, a nonwoven fabric of polyamide fiber and a nonwoven fabric of polyolefin fiber such as polyethylene and polypropylene to which a hydrophilic functional group is imparted can be used. Specifically, use of a nonwoven fabric of polyolefin fiber subjected to sulfonation treatment for imparting a sulfone group is preferred. Here, the sulfone group is imparted by treating the nonwoven fabric with an acid containing a sulfate group such as sulfuric acid or fuming sulfuric acid. The sulfonation treatment thus applied to the separator develops an effect for suppressing the self-discharge of a battery as well as imparting the hydrophilicity.

The positive electrode 24 includes an electrically conductive positive electrode substrate material with a porous structure having a number of pores, and a positive electrode mixture held in the pores and on the surface of the positive substrate material.

As the positive electrode substrate, for example, a nickel plated metal body in a reticular form, a sponge form, or a fibrous form, or a foamed nickel (nickel foam) may be used.

The positive electrode mixture includes a positive electrode active material particle, a conducting agent, a positive electrode additive, and a binder. The binder has functions to bind the positive electrode active material particle, the conducting agent and the positive electrode additive, and to bind the positive electrode mixture to the positive electrode substrate material in parallel. Examples of the binder for the use may include carboxymethyl cellulose, methyl cellulose, PTFE (polytetrafluoroethylene) dispersion, and HPC (hydroxypropyl cellulose) dispersion.

The positive electrode active material particle is a nickel hydroxide particle or a higher order nickel hydroxide particle. Preferably, at least one of zinc, magnesium and cobalt is solid-dissolved in these nickel hydroxide particles.

As the conducting agent, for example, at least one or more selected from the group consisting a cobalt compound such as cobalt oxide (CoO) and cobalt hydroxide ($Co(OH)_2$) and cobalt (Co) may be used. The conducting agent is added to the positive electrode mixture on an as needed basis. The conducting agent may be contained in the positive electrode mixture in a powder form or in a coating form to cover the surface of the positive electrode active material.

A positive electrode additive appropriately selected on an as needed basis is added to improve the properties of the positive electrode. Examples of the principal positive electrode additive include yttrium oxide and zinc oxide.

The positive electrode 24 may be manufactured, for example, by the method described below.

First, a positive electrode mixture slurry is prepared, containing positive electrode active material powder including the positive electrode active material particle obtained as described above, the conducting agent, the positive electrode additive, water and the binder. The positive electrode mixture slurry obtained is, for example, filled in a nickel foam and dried. After drying, the nickel foam filled with nickel hydroxide particles and the like is rolled and then cut out. The positive electrode 24 which holds the positive electrode mixture is thus manufactured.

Subsequently, the negative electrode 26 is described.

The negative electrode 26 includes an electrically conductive negative electrode core in a strip shape, to which a negative electrode mixture is held.

The negative electrode core includes a metal member in a sheet form having distributed open holes. For example, a punching metal sheet may be used as the negative electrode core. The negative electrode mixture is not only filled in the open holes of the negative electrode core but also held on both surfaces of the negative electrode core in a layered form.

The negative electrode mixture includes a hydrogen storage alloy particle, a negative electrode additive, a conducting agent, and a binder. The hydrogen storage alloy is an alloy capable of absorbing and releasing hydrogen as the negative electrode active material. The binder described above has functions to binds the hydrogen storage alloy particle, the negative electrode additive, and the conducting agent to each other, and to bind the negative electrode mixture to the negative electrode core in parallel. As the binder, a hydrophilic or hydrophobic polymer and the like may be used. As the conducting agent, carbon black, graphite, nickel powder and the like may be used.

The negative electrode additive appropriately selected on an as needed basis is added to improve the properties of the negative electrode. Examples of the principal negative electrode additive include a water repellent such as a fluorine resin. The water repellent suppresses the excessive oxidation of the hydrogen storage alloy, so that the life characteristics of a battery can be improved.

The hydrogen storage alloy for use in the hydrogen storage alloy particle has a composition containing at least a rare earth element and Ni, excluding Co and Mn. The hydrogen storage alloy has a specific composition represented by the following general formula (II).

$$Ln_{1-x}Mg_xNi_{y-z}M_z \ldots \qquad (II)$$

In the general formula (II), Ln is at least one element selected from the group consisting of Sc, Y, La, Ce, Pr, Nd, Pm, Sm, Eu, Gd, Tb, Dy, Ho, Er, Tm, Yb, Lu and Zr; M is at least one element selected from the group consisting of V, Nb, Ta, Cr, Mo, Fe, Ga, Zn, Sn, In, Cu, Al, Si, P, and B; subscripts x, y and z satisfy the following relations, respectively: $0 \leq x \leq 0.01$, $3.3 \leq y \leq 3.6$, and $0 \leq z \leq 0.50$; and the content of La in Ln is 25% or less.

Since the hydrogen storage alloy of the present invention has a composition excluding Co and Mn, a so-called shuttle reaction caused by Co and Mn is reduced to achieve the suppression of the self-discharge of a battery. More specifically, the shuttle reaction is a reaction of Co and Mn dissolved in an alkaline electrolyte to repeat the redox reaction between the positive electrode and the negative electrode, which consumes the battery capacity. The occurrence of the shuttle reaction results in the increase in the amount of self-discharge. The absence of Co and Mn inhibits the shuttle reaction, thereby suppressing self-discharge of a battery to improve the residual capacity rate.

In the case of a hydrogen storage alloy of the present invention containing La in the elements selected as Ln, the La ratio in Ln is 25% or less and the subscript x value representing the content of Mg is 0.05 or less. In other words, the amounts of La and Mg in the hydrogen storage alloy are set to be somewhat lower than those of the conventional suppressed self-discharge type hydrogen storage alloy. In such a hydrogen storage alloy, the amounts of La and Mg distributed in the surface are also somewhat lower. When the alkaline electrolyte containing NaOH as the main solute acts on the surface of the alloy including such smaller amounts of La and Mg, the equilibrium pressure for releasing hydrogen, which is related to the negative electrode potential, is not lowered. As a result, it is presumed that the reduction in the operating voltage after left standing for a long period can be suppressed.

With a subscript y value representing the total of Ni and M of less than 3.3, the hydrogen storage capacity of a hydrogen storage alloy decreases, while with a y value of more than 3.6, the life characteristics of a battery are degraded. Accordingly, the following relation is preferably satisfied: $3.3 \leqq y \leqq 3.6$.

Further, in order to improve the cycle life characteristics of a battery, Al is preferably selected as M in the general formula (II). The subscript z value representing the amount of Al as the element M is preferably 0.17 or more. Meanwhile, an excessively large amount of Al reduces the hydrogen storage capacity of a hydrogen storage alloy. Accordingly the z value is preferably 0.50 or less, more preferably 0.30 or less.

In the general formula (II), when Ln and Mg are represented by a component A, and Ni and M by a component B, the hydrogen storage alloy of the present invention has an $A_2B_7$-type structure or an $A_5B_{19}$-type structure, in which $AB_2$-type subunits and $AB_5$-type subunits are stacked to form a so-called superlattice structure. The hydrogen storage alloy with such a superlattice structure achieves both advantages: the stable absorption and release of hydrogen as the features of an $AB_5$-type alloy, and the large hydrogen storage capacity as the feature of an $AB_2$-type alloy. As a result, the hydrogen storage alloy of the present invention has an excellent hydrogen storage capacity, allowing the battery 2 to be obtained with an increased capacity.

Then, the hydrogen storage alloy particles described above can be obtained, for example, as follows.

First, metal raw materials are weighed and mixed to obtain a predetermined composition. The mixture is melted, for example, in a high-frequency induction melting furnace under an inert gas atmosphere, and then cooled to form an ingot. The resulting ingot is subjected to a heat treatment at 900 to 1200°C for 5 to 24 hours in an inert gas atmosphere. The ingot is then cooled to room temperature, pulverized and sieved to obtained hydrogen storage alloy particles with a desired particle size.

On this occasion, the surface of the hydrogen storage alloy particles is preferably treated with an acidic solution, an alkaline solution, or the like. The surface treatment with an acid solution improves the initial discharge characteristics of a battery. The surface treatment with an alkaline solution activates an electrode and improves the cycle life characteristics of a battery.

The negative electrode 26 can be manufactured, for example, as follows.

First, hydrogen storage alloy powder including hydrogen storage alloy particles, a conductive agent, a binder, and water are kneaded to prepare a negative electrode mixture slurry. A negative electrode additive may be further added on an as needed basis. The resulting negative electrode mixture slurry is applied to the negative electrode core and dried. After drying, the negative electrode core to which hydrogen storage alloy particles etc. are adhered is rolled and cut out. The negative electrode 26 is thus manufactured.

The positive electrode 24 and the negative electrode 26 thus manufactured are wound in a spiral form, with a separator 28 lying therebetween. The electrode group 22 is thus formed.

The electrode group 22 thus obtained is accommodated in the outer can 10. Subsequently, a predetermined amount of an alkaline electrolyte solution is injected into the outer can 10.

The outer can 10 in which the electrode group 22 and the alkaline electrolyte are accommodated is sealed with the cover plate 14 having the positive electrode terminal 20, to obtain the battery 2 of the present invention. The resulting battery 2 is subjected to an initial activation treatment to achieve a ready-to-use state.

The battery 2 of the present invention thus obtained is an excellent battery capable of suppressing the self-discharge and the reduction in the operating voltage in parallel after left standing, due to a synergy effect of the alkaline electrolyte and the hydrogen storage alloy as described above. More specifically, use of an alkaline electrolyte containing NaOH as the main solute has an effect for suppressing the self-discharge reaction. And use of a hydrogen storage alloy having a composition with specified amounts of La and Mg as represented by the general formula (II) has an effect for suppressing reduction in the operating voltage, with suppressed reduction in the equilibrium pressure of hydrogen release.

[Examples]

1. Manufacturing of battery

(Reference Example 1)

(1) Manufacturing of positive electrode

Nickel sulfate, zinc sulfate, magnesium sulfate and cobalt sulfate were weighed such that 3 mass% of zinc, 0.4 mass% of magnesium, and 1 mass% of cobalt are present relative to nickel. These are added to a 1 N sodium hydroxide aqueous solution containing ammonium ions to prepare a mixed aqueous solution. While stirring the resultant mixed aqueous solution, a 10 N sodium hydroxide aqueous solution was gradually added to the mixed aqueous solution to cause a reaction. In the reaction, the pH was stabilized at 13 to 14, to form nickel hydroxide particles mainly composed of nickel hydroxide, with zinc, magnesium and cobalt solid-soluted therein.

The resultant nickel hydroxide particles were washed 3 times with pure water in an amount of 10 times, and then dewatered and dried.

Then, 100 parts by mass of the positive electrode active material powder including the nickel hydroxide particles manufactured as described above were mixed with 10 parts by mass of cobalt hydroxide powder, and further with 0.5 parts by mass of yttrium oxide, 0.3 parts by mass of zinc oxide, and 40 parts by mass of an HPC dispersion liquid, to prepare a positive electrode mixture slurry. A nickel foam in a sheet form as the positive electrode substrate was filled with the positive electrode mixture slurry. The nickel foam holding the positive electrode mixture was dried and then rolled. After rolling, the nickel foam holding the positive electrode mixture was cut into a predetermined shape. A positive electrode 24 for the AA size was thus obtained.

(2) Manufacturing of hydrogen storage alloy and negative electrode

First, a rare earth component containing 20 mass% of La and 80 mass% of Sm was prepared. The obtained rare earth component, Mg, Ni and Al were weighed to prepare a mixture thereof at a molar ratio represented by the following formula (III).

$$\text{Rare earth component:Mg:Ni:Al}=0.95:0.05:3.30:0.20 \ ... \qquad (III)$$

The resulting mixture was melted in a high-frequency induction melting furnace under an argon gas atmosphere. The molten metal was cast into a mold, and then cooled to room temperature to prepare the ingot of a hydrogen storage alloy. A sample taken from the ingot was subjected to composition analysis by a high-frequency plasma spectroscopy (ICP). As a result, the composition of the hydrogen storage alloy was $(La_{0.20}Sm_{0.80})_{0.95}Mg_{0.05}Ni_{3.30}Al_{0.20}$.

Subsequently, the ingot was subjected to a heat treatment. In the heat treatment, the ingot was heated to and held at a temperature of 1000°C for 10 hours under an argon gas atmosphere. After the heat treatment, the ingot including hydrogen storage alloy cooled to room temperature (25°C) was mechanically pulverized under an argon atmosphere to prepare powder including the hydrogen storage alloy particles. The resulting hydrogen storage alloy particles had a volume average diameter (MV) of 60 $\mu$m.

A negative electrode mixture slurry was prepared by adding 0.4 parts by mass of sodium polyacrylate, 0.1 parts by mass of carboxymethyl cellulose, 1.0 part by mass of a styrene-butadiene rubber (SBR) dispersion, 1.0 part by mass of carbon black, and 30 parts by mass of water to 100 parts by mass of the resultant powder including hydrogen storage alloy particles, and kneading the mixture.

The negative electrode mixture slurry was uniformly applied to both sides of a perforated iron plate as the negative electrode core, so as to have a consistent thickness. The perforated plate is 60 $\mu$m thick, having a nickel plated surface.

After drying of the slurry, the perforated plate holding the negative electrode mixture including the powder of a hydrogen storage alloy and the like was further rolled to increase the amount of alloy per volume, and then cut out to make a negative electrode 26 for the AA size, including the hydrogen storage alloy.

(3) Assembling of nickel hydrogen secondary battery

The resultant positive electrode 24 and the negative electrode 26 were wound in a spiral form, with a separator 28 lying therebetween. The electrode group 22 was thus manufactured. The separator 28 for use in manufacturing the electrode group 22 included a sulfonation-treated nonwoven fabric of polypropylene fiber, having a thickness of 0.1 mm (weight per unit area: 53 g/m$^2$).

Meanwhile, an alkaline electrolyte including an aqueous solution containing KOH, NaOH and LiOH as solutes was prepared. Here, KOH, NaOH and LiOH were contained in the alkaline electrolyte at a ratio represented by the formula (I) described above, i.e. KOH:NaOH:LiOH=0.8:7.0:0.02. The concentration of the alkaline electrolyte was 7.82 mol/l.

Subsequently, the electrode group 22 was accommodated in a bottomed cylindrical outer can 10, which was then injected with 2.2 g of the alkaline electrolyte described above. The opening of the outer can 10 was then sealed with a sealing member 11, to thereby assemble a nickel hydrogen secondary battery 2 with the AA size, having a nominal capacity of 2000 mAh. The nickel hydrogen secondary battery is referred to as battery a. Here, the nominal capacity is defined as the discharge capacity of a battery when discharged at 0.2 A until the battery voltage reaches 1.0 V, after charging at 0.2 A for 16 hours.

(4) Initial activation treatment

Under an environment with a temperature of 25°C, the battery a was subjected to an initial activation treatment to be charged at 0.1 It for 16 hours and discharged at 0.2 It until the battery voltage reached 0.5 V, which was repeated twice. The ready-to-use state of the battery a was thus achieved.

Reference Example 2)

A nickel hydrogen secondary battery (battery b) was manufactured in the same manner as the battery a in Example 1, except that the hydrogen storage alloy composition was changed to $(La_{0.20}Sm_{0.80})_{0.97}Mg_{0.05}Ni_{3.33}Al_{0.17}$.

(Reference Example 3)

A nickel hydrogen secondary battery (battery c) was manufactured in the same manner as the battery a in Example 1, except that the hydrogen storage alloy composition was changed to $(La_{0.20}Sm_{0.80})_{0.97}Mg_{0.03}Ni_{3.30}Al_{0.20}$.

(Example 4)

A nickel hydrogen secondary battery (battery d) was manufactured in the same manner as the battery a in Example 1, except that the hydrogen storage alloy composition was changed to $(La_{0.20})Sm_{0.80})_{0.99}Mg_{0.01}Ni_{3.25}Al_{0.25}$.

(Example 5)

A nickel hydrogen secondary battery (battery e) was manufactured in the same manner as the battery a in Reference Example 1, except that the hydrogen storage alloy composition was changed to $La_{0.20}Sm_{0.80}Ni_{3.25}Al_{0.25}$.

(Reference Example 6)

A nickel hydrogen secondary battery (battery f) was manufactured in the same manner as the battery a in Example 1, except that the hydrogen storage alloy composition was changed to $(La_{0.25}Sm_{0.75})_{0.95}Mg_{0.05}Ni_{3.30}Al_{0.20}$.

(Example 7)

A nickel hydrogen secondary battery (battery g) was manufactured in the same manner as the battery a in Example 1, except that the hydrogen storage alloy composition was changed to $(Sm_{1.00})_{0.99}Mg_{0.01}Ni_{3.25}Al_{0.25}$.

(Reference Example 8)

A nickel hydrogen secondary battery (battery h) was manufactured in the same manner as the battery a in Example 1, except that the hydrogen storage alloy composition was changed to $(La_{0.20}Sm_{0.80})_{0.99}Mg_{0.01}Ni_{3.25}Al_{0.25}$, the molar ratio of KOH, NaOH and LiOH contained in the alkaline electrolyte was changed to KOH:NaOH:LiOH=4.0:4.0:0.0, and the alkaline electrolyte concentration was changed to 8.0 mol/l.

(Comparative Example 1)

A nickel hydrogen secondary battery (battery i) was manufactured in the same manner as the battery a in Example 1, except that the hydrogen storage alloy composition was changed to $(La_{0.20}Sm_{0.80})_{0.91}Mg_{0.09}Ni_{3.30}Al_{0.20}$.

(Comparative Example 2)

A nickel hydrogen secondary battery (battery j) was manufactured in the same manner as the battery a in Example 1, except that the hydrogen storage alloy composition was changed to $(La_{0.40}Sm_{0.60})_{0.95}Mg_{0.05}Ni_{3.30}Al_{0.20}$.

(Comparative Example 3)

A nickel hydrogen secondary battery (battery k) was manufactured in the same manner as the battery a in Example 1, except that the hydrogen storage alloy composition was changed to $(La_{0.60}Sm_{0.40})_{0.91}Mg_{0.09}Ni_{3.30}Al_{0.20}$.

(Comparative Example 4)

A nickel hydrogen secondary battery (battery I) was manufactured in the same manner as the battery a in Example 1, except that the hydrogen storage alloy composition was changed to $(La_{0.20}Sm_{0.80})_{0.99}Mg_{0.01}Ni_{3.25}Al_{0.25}$, the molar ratio of KOH, NaOH and LiOH contained in the alkaline electrolyte was changed to KOH:NaOH:Li-OH=8.0:0.0:0.0, and the alkaline electrolyte concentration was changed to 8.0 mol/l.

2. Evaluation of nickel hydrogen secondary battery

Initial activation-treated batteries a to 1 were subjected to a charge/discharge test by the following procedures.

First, each battery placed under an environment at 25°C was charged at 1.0 It. On this occasion, the charging was terminated when, after reaching a maximum value, the battery voltage lowered by 10 mV from the maximum value, so as to perform a so-called charging under -ΔV control (hereinafter, simply referred to as -ΔV charging). After taking a 1-hour rest after completion of the -ΔV charging, discharging was performed until the battery voltage reached 1.0 V at 0.2 It, and a 1-hour rest was then taken. The discharge capacity of the battery at this time was measured. The discharge capacity was defined as the initial capacity C. Further, a voltage measurement was performed when the discharge capacity reached half the value of the discharge capacity during the period from the start to end of the discharge. This voltage was defined as the initial operating voltage D.

Subsequently, each battery placed in an environment at 25°C was subjected to -ΔV charging at 1.0 It. The batteries were then left standing in a thermostat chamber at 60°C for 14 days, so as to proceed the self-discharge of the batteries. After left standing at 60°C for 14 days, the battery placed in an environment at 25°C was discharged at 0.2 It until the battery voltage reached 1.0 V. The discharge capacity at this time was measured. The discharge voltage was defined as the capacity E after left standing. Further, a voltage measurement of the battery after left standing for 14 days was performed when the discharge capacity reached half the value of the discharge capacity during the period from the start to end of the discharge. This voltage was defined as the operating voltage F after left standing.

From the initial capacity value C and the capacity value E after left standing, the residual capacity rate was obtained based on the following formula (IV). The results are shown as the residual capacity rate in Table 1. It is indicated that the self-discharge is further suppressed as the residual capacity rate increases.

```
Residual capacity rate (%)=(Capacity E after left
standing/Initial capacity C)×100 ...(IV)
```

For each battery, the reduction in the operating voltage after left standing was obtained based on the following formula (V). The results are shown as the reduction in the operating voltage after left standing in Table 1. It is indicated that the reduction in the operating voltage is further suppressed as the operating voltage after left standing decreases.

```
Reduction in operating voltage after left standing
(mV)=(Initial operating voltage D)-(Operating voltage F
after left standing) ...(V)
```

[Table 1]

| | Battery | Hydrogen storage alloy composition | Molar ratio of solute in electrolyte (KOH:NaOH:LiOH) | Residual capacity rate (%) | Reduction in operating voltage after left standing (mV) |
|---|---|---|---|---|---|
| Example 1* | a | $(La_{0.20}Sm_{0.80})_{0.95}Mg_{0.05}Ni_{3.30}Al_{0.20}$ | 0.8:7.0:0.02 | 80.8 | 61 |
| Example 2* | b | $(La_{0.20}Sm_{0.80})_{0.97}Mg_{0.05}Ni_{3.33}Al_{0.17}$ | 0.8:7.0:0.02 | 80.6 | 62 |
| Example 3* | c | $(La_{0.20}Sm_{0.80})_{0.97}Mg_{0.03}Ni_{3.30}Al_{0.20}$ | 0.8:7.0:0.02 | 81.6 | 59 |
| Example 4 | d | $(La_{0.20}Sm_{0.80})_{0.99}Mg_{0.01}Ni_{3.25}Al_{0.25}$ | 0.8:7.0:0.02 | 83.2 | 55 |
| Example 5 | e | $La_{0.20}Sm_{0.80}Ni_{3.25}Al_{0.25}$ | 0.8:7.0:0.02 | 83.3 | 56 |

(continued)

|  | Battery | Hydrogen storage alloy composition | Molar ratio of solute in electrolyte (KOH:NaOH: LiOH) | Residual capacity rate (%) | Reduction in operating voltage after left standing (mV) |
|---|---|---|---|---|---|
| Example 6* | f | $(La_{0.25}Sm_{0.75})_{0.95}Mg_{0.05}Ni_{3.30}Al_{0.20}$ | 0.8:7.0:0.02 | 83.1 | 60 |
| Example 7 | g | $(Sm_{1.00})_{0.99}Mg_{0.01}Ni_{3.25}Al_{0.25}$ | 0.8:7.0:0.02 | 80.5 | 59 |
| Example 8* | h | $(La_{0.20}Sm_{0.80})_{0.99}Mg_{0.01}Ni_{3.25}Al_{0.25}$ | 4.0:4.0:0.0 | 80.1 | 60 |
| Comparative Example 1 | i | $(La_{0.20}SM_{0.80})_{0.91}Mg_{0.09}Ni_{3.30}Al_{0.}$ | 0.8:7.0:0.02 | 78.8 | 70 |
| Comparative Example 2 | j | $(La_{0.40}Sm_{0.60})_{0.95}Mg_{0.05}Ni_{3.30}Al_{0.20}$ | 0.8:7.0:0.02 | 80.7 | 70 |
| Comparative Example 3 | k | $(La_{0.60}Sm_{0.40})_{0.91}Mg_{0.09}Ni_{3\cdot30}Al_{0.20}$ | 0.8:7.0:0.02 | 80.7 | 76 |
| Comparative Example 4 | l | $(La_{0.20}Sm_{0.80})_{0.99}Mg_{0.01}Ni_{3.25}Al_{0.25}$ | 8.0:0.0:0.0 | 76.3 | 63 |
| *Reference Examples not within the scope of the present invention | | | | | |

3. Consideration

(1) The battery k in Comparative Example 3 containing relatively large amounts of La and Mg had a residual capacity rate of 80.7% and a reduction in the operating voltage after left standing of 76 mV. Each of the batteries in Examples having amounts of La and Mg smaller than that of Comparative Example 3 had a residual capacity rate equal to or more than that of Comparative Example 3, and a reduction in the operating voltage after left standing equal to or less than that of Comparative Example 3. It was found from the results that minimized amounts of La and Mg contained in a hydrogen storage alloy enables the residual capacity rate to be maintained at the same degree as those of conventional batteries, while suppressing the reduction in the operating voltage.

(2) The battery d in Example 4 with an La ratio in Ln of 20%, and a subscript x value to indicate the amount of Mg of 0.01 had a residual capacity rate of 83.2% and a reduction in the operating voltage after left standing of 55 mV. Further, the battery e in Example 5 with an La ratio in Ln of 20%, containing no Mg, had a residual capacity rate of 83.3% and a reduction in the operating voltage after left standing of 56 mV. It was found from the results that with an La ratio in Ln of 20%, and with a subscript x value to indicate the amount of Mg of 0.01 or less, the residual capacity rate can be improved than before, and the reduction in the operating voltage can be suppressed than before.

(3) As described above, with minimized amounts of La and Mg contained in a hydrogen storage alloy, preferably with an La ratio in Ln of 20%, and a subscript x value to indicate the amount of Mg of 0.01 or less, the amounts of La and Mg present in the surface of the hydrogen storage alloy decreased. It is presumed that when an alkaline electrolyte containing NaOH as the main solute acts on the surface of an alloy including smaller amounts of La and Mg, no reduction occurs in the equilibrium pressure for hydrogen release relating to the negative electrode potential, thereby suppressing the reduction in the operating voltage.

(4) In comparison with the battery d in Example 4 and the battery h in Reference Example 8 using an alkaline electrolyte containing NaOH as the main solute, the battery 1 in Comparative Example 4 using an alkaline electrolyte containing KOH as the main solute, excluding NaOH, has a low residual capacity rate and a large reduction in the operating voltage. It was found from the results that with use of a hydrogen storage alloy with minimized contents of La and Mg, and with use of an alkaline electrolyte containing NaOH as the main solute, the residual capacity rate can be improved than before, and the reduction in the operating voltage can be suppressed than before.

The present invention is not limited to the embodiments and Examples described above, but various modifications may be made. For example, the nickel hydrogen secondary battery may be a square battery, and the mechanical structure is not particularly limited.

**Explanation of Reference Signs**

2     Nickel hydrogen secondary battery
10    Outer can
22    Electrode group
24    Positive electrode
26    Negative electrode
28    Separator

**Claims**

1. A nickel hydrogen secondary battery comprising a container and an electrode group accommodated in the container in a sealed state together with an alkaline electrolyte, wherein
the electrode group comprises a positive electrode and a negative electrode having a separator sandwiched therebetween,
the alkaline electrolyte comprises NaOH as the main solute, and
the negative electrode comprises a hydrogen storage alloy having a composition represented by a general formula: $Ln_{1-x}Mg_xNi_{y-z}M_z$, wherein Ln is at least one element selected from the group consisting of Sc, Y, La, Ce, Pr, Nd, Pm, Sm, Eu, Gd, Tb, Dy, Ho, Er, Tm, Yb, Lu and Zr; M is at least one element selected from the group consisting of V, Nb, Ta, Cr, Mo, Fe, Ga, Zn, Sn, In, Cu, Al, Si, P, and B; subscripts x, y and z satisfy the following relations, respectively: $0 \leq x \leq 0.01$, $3.3 \leq y \leq 3.6$, and $0 \leq z \leq 0.50$; and the content of La in Ln is 25% or less.

2. The nickel hydrogen secondary battery according to claim 1, comprising Al as M in the general formula.

3. The nickel hydrogen secondary battery according to claim 2, wherein the subscript z satisfies the following relation: $0.17 \leq z \leq 0.50$.

4. The nickel hydrogen secondary battery according to claim 3, wherein the subscript z satisfies the following relation: $0.17 \leq z \leq 0.30$.

**Patentansprüche**

1. Nickel-Wasserstoff-Sekundärbatterie, umfassend einen Behälter und einen Elektrodensatz, der in dem Behälter in einem abgedichteten Zustand zusammen mit einem alkalischen Elektrolyten aufgenommen ist, wobei
der Elektrodensatz eine positive Elektrode und eine negative Elektrode mit einem dazwischen angeordneten Separator umfasst,
der alkalische Elektrolyt hauptsächlich NaOH als gelösten Stoff umfasst und
die negative Elektrode eine Wasserstoffspeicherlegierung mit einer Zusammensetzung umfasst, die durch eine allgemeine Formel dargestellt ist: $Ln_{1-x}Mg_xNi_{y-z}M_z$, wobei Ln mindestens ein Element ist, das ausgewählt ist aus der Gruppe bestehend aus Sc, Y, La, Ce, Pr, Nd, Pm, Sm, Eu, Gd, Tb, Dy, Ho, Er, Tm, Yb, Lu und Zr; M mindestens ein Element ist, das ausgewählt ist aus der Gruppe bestehend aus V, Nb, Ta, Cr, Mo, Fe, Ga, Zn, Sn, In, Cu, Al, Si, P und B; wobei die tiefgestellten Zeichen x, y und z die folgenden Beziehungen erfüllen: $0 \leq x \leq 0,01$, $3,3 \leq y \leq 3,6$ bzw. $0 \leq z \leq 0,50$; und der Gehalt von La in Ln 25% oder weniger beträgt.

2. Nickel-Wasserstoff-Sekundärbatterie nach Anspruch 1, umfassend Al als M in der allgemeinen Formel.

3. Nickel-Wasserstoff-Sekundärbatterie nach Anspruch 2, wobei das tiefgestellte Zeichen z die folgende Beziehung erfüllt: $0,17 \leq z \leq 0,50$.

4. Nickel-Wasserstoff-Sekundärbatterie nach Anspruch 3, wobei das tiefgestellte Zeichen z die folgende Beziehung erfüllt: $0,17 \leq z \leq 0,30$.

**Revendications**

1.  Pile secondaire au nickel-hydrogène comprenant un boîtier et un groupe d'électrodes logé dans le boîtier dans un état étanche avec un électrolyte alcalin, sachant que

    le groupe d'électrodes comprend une électrode positive et une électrode négative comportant un séparateur intercalé entre elles,

    l'électrolyte alcalin comprend du NaOH comme soluté principal, et

    l'électrode négative comprend un alliage de stockage d'hydrogène ayant une composition représentée par une formule générale : $Ln_{1-x}Mg_xNi_{y-z}M_z$, sachant que Ln est au moins un élément sélectionné dans le groupe constitué par Sc, Y, La, Ce, Pr, Nd, Pm, Sm, Eu, Gd, Tb, Dy, Ho, Er, Tm, Yb, Lu et Zr ; M est au moins un élément sélectionné dans le groupe constitué par V, Nb, Ta, Cr, Mo, Fe, Ga, Zn, Sn, In, Cu, Al, Si, P, et B ; les indices x, y et z satisfont aux relations suivantes, respectivement : $0 \leq x \leq 0{,}01$, $3{,}3 \leq y \leq 3{,}6$, et $0 \leq z \leq 0{,}50$ ; et la teneur en La de Ln est de 25 % ou moins.

2.  La pile secondaire au nickel-hydrogène selon la revendication 1, comprenant Al en tant que M dans la formule générale.

3.  La pile secondaire au nickel-hydrogène selon la revendication 2, sachant que l'indice z satisfait à la relation suivante : $0{,}17 \leq z \leq 0{,}50$.

4.  La pile secondaire au nickel-hydrogène selon la revendication 3, sachant que l'indice z satisfait à la relation suivante : $0{,}17 \leq z \leq 0{,}30$.

# FIG. 1

**REFERENCES CITED IN THE DESCRIPTION**

**Patent documents cited in the description**

- JP 2001316744 A
- US 2014030583 A1
- US 7700237 B2
- US 2011052983 A1
- JP 2007149646 A